# EUROPÄISCHE PATENTSCHRIFT

(11) **EP 1 825 171 B1**
(45) Veröffentlichungstag und Bekanntmachung des Hinweises auf die Patenterteilung: **29.04.2009**
(21) Anmeldenummer: 05810730.1
(22) Anmeldetag: 29.11.2005
(51) Int. Cl.: F16H 61/24, F16H 63/38

(54) **SCHALTEINRICHTUNG EINES HANDSCHALTGETRIEBES FÜR KRAFTFAHRZEUGE**
SHIFTING DEVICE OF A MANUAL GEARBOX FOR A MOTOR VEHICLE
DISPOSITIF DE COMMUTATION DE BOITE DE VITESSES MANUELLE POUR VEHICULES AUTOMOBILES

(30) Priorität: 14.12.2004 DE 102004060056
(43) Veröffentlichungstag der Anmeldung: 29.08.2007
(73) Patentinhaber: ZF Friedrichshafen AG, 88038 Friedrichshafen (DE)
(72) Erfinder: BEER, Uwe, 14476 Fahrland (DE)
(86) Internationale Anmeldenummer: PCT/EP2005/012712
(87) Internationale Veröffentlichungsnummer: WO 2006/063677

(56) Entgegenhaltungen:
- EP-A- 0 895 007
- DE-A1- 10 229 320
- US-A- 5 036 721

## Beschreibung

Die Erfindung betrifft eine Schalteinrichtung nach dem Oberbegriff des Patentanspruches 1 - bekannt durch die DE 102 29 320 A1 der Anmelderin.

Handschaltgetriebe für Kraftfahrzeuge werden vom Fahrer mit einem Schalthebel betätigt, welcher aus einer Ruheposition heraus in einer so genannten Quergasse und in mehreren Schaltgassen (senkrecht zur Quergasse) bewegt wird. Der Schaltvorgang besteht somit einerseits in einer Querbewegung des Schalthebels, dem Wählen, und in einer dazu senkrechten Bewegung, dem Schalten. Mit der Wählbewegung wird eine zu schaltende Schaltmuffe im Getriebe gewählt, und mit der Schaltbewegung wird das betreffende Zahnrad in den Leistungsfluss gebracht. Um den Fahrer bei seiner Schaltbewegung zu unterstützen und ihm ein Gefühl für die jeweilige Position des Schalthebels zu geben, werden im Getriebe Wähl- oder Schaltkräfte erzeugt, welche der Schaltbewegung des Fahrers mehr oder weniger stark entgegenwirken.

Durch die DE 102 29 320 A1, von der die Erfindung ausgeht, wurde eine Schalteinrichtung zur Erzeugung eines Wählkraftverlaufes durch ein schwenkbar in einem Getriebegehäuse angeordnetes Konturelement bekannt, welches in Eingriff mit einer an Schwingarmen einer zentralen Schaltwelle befestigten Rolle steht. Bei oder Drehung der Schaltwelle, die der Wählbewegung entspricht, wird somit ein Wählkraftverlauf erzeugt, welcher durch die Kontur des Konturelementes beeinflussbar ist.

Durch die DE 100 16 364 A1 wurde ein Wähl- und Schaltmodul für ein Handschaltgetriebe bekannt, bei welchem unterschiedliche Wählkräfte durch das Zusammenwirken von unterschiedlichen Federn, einer Spiralfeder und einer Schenkelfeder, erzeugt werden. Der Fahrer wird somit bei seiner Schaltbewegung unterstützt und erfährt ein Gefühl dafür, in welcher Schaltgasse sich der Schalthebel befindet, insbesondere beim Schalten des Rückwärtsganges.

Durch die DE 40 20160 A1 der Anmelderin wurde eine weitere Schalteinrichtung mit einer zentralen Schaltwelle mit einer Wählschwinge bekannt, durch welche Wählkräfte im Zusammenwirken mit Federelementen erzeugt werden, wobei durch die Wählschwinge bei einer Wählbewegung verschiedene Druckfedern und eine Schenkelfeder ausgelenkt werden.

Der oben erwähnte Stand der Technik zeigt, dass für die Wählkrafterzeugung jeweils spezielle Vorrichtungen im Handschaltgetriebe vorgesehen sind. Zusätzlich können Schalteinrichtungen auch Kulissenführungen der Schaltwelle aufweisen, welche das für Handschaltgetriebe typische H-Schaltbild vorgeben.

Es ist Aufgabe der vorliegenden Erfindung, eine Schalteinrichtung der eingangs genannten Art hinsichtlich ihrer Funktion zu erweitern und gleichzeitig die Teilezahl und die Herstellungskosten für das Gesamtgetriebe zu reduzieren.

Diese Aufgabe wird durch die Merkmale des Patentanspruches 1 gelöst. Erfindungsgemäß ist vorgesehen, dass das Konturelement zur Erzeugung eines Wählkraftverlaufes zusätzlich die Funktion einer Kulissenführung bei der Wähl- und Schaltbewegung übernimmt. Dazu sind an den Schwingarmen zusätzlich Kutissenstifte vorgesehen, welche mit der im Konturelement angeordneten Kulissenführung zusammenwirken und damit Rastpositionen für die einzelnen Schaltgassen einnehmen. Damit wird der Vorteil erreicht, dass das Konturelement in Verbindung mit den Schwingarmen an der zentralen Schaltwelle neben der Wählkrafterzeugung auch eine Kulissenführung bewirkt, für welche nach dem Stand der Technik eine gesonderte Einrichtung erforderlich ist, die mit zusätzlichen Teilen verbunden ist. Durch die erfindungsgemäße Kombination beider Funktionen ergeben sich für das Gesamtgetriebe Bauraumvorteile, eine niedrigere Teilezahl und geringere Herstellkosten.

Nach einer vorteilhaften Ausgestaltung der Erfindung wird die Kulissenführung durch den Schaltgassen zugeordnete Ausnehmungen gebildet, in welche die Kulissenstifte eingreifen und somit für die betreffende Schaltgasse fixiert sind. Vorzugsweise sind zwischen den Ausnehmungen Schrägflächen angeordnet, welche eine Gassenabweisfunktion ausüben. Damit wird der Vorteil erreicht, dass die Kulissenstifte bei der Wählbewegung jeweils in eine Ausnehmung geführt werden. Damit kann durch die erfindungsgemäße Kulissenführung das klassische H-Schaltbild für den Schalthebel abgebildet werden. Um die Abweisfunktion zu verbessern, sind die Kulissenstifte stirnseitig abgerundet und kegelförmig ausgebildet.

In weiterer vorteilhafter Ausgestaltung der Erfindung ist das Konturelement als Stanzprägeteil ausgebildet, d. h. aus einer Blechplatine werden die Außenkontur und die Ausnehmungen ausgestanzt, während die Schrägflächen zwischen den Ausnehmungen geprägt werden, was in einem Arbeitsgang möglich ist. Damit wird der Vorteil geringer Herstellkosten erreicht.

Nach einer vorteilhaften Weiterbildung der Erfindung ist die Kulissenführung als durchgehende Schlitzkontur ausgebildet, wobei kreisförmige Erweiterungen die Rastpositionen für die jeweiligen Schaltgassen bilden und zwischen den Erweiterungen Einengungen der Schlitzkontur vorgesehen sind. Mit dieser Ausbildung der Kulissenführung wird der Vorteil erreicht, dass das gesamte Konturelement als reines Stanzteil herstellbar ist. Die als 2-D-Konturen ausgebildeten Verengungen übernehmen somit die Gassenabweisfunktion.

In weiterer vorteilhafter Ausgestaltung der Erfindung sind sowohl für die Wähl- als auch für die Schaltbewegung Anschläge am Konturelement bzw. an den Schwingarmen vorgesehen. Damit ergeben sich weitere Vorteile bezüglich Bauraum und Teilezahl.

Ausführungsbeispiele der Erfindung sind in der Zeichnung dargestellt und werden im Folgenden näher beschrieben. Es zeigen
- Fig. 1: ein erstes Ausführungsbeispiel für eine Schalteinrichtung mit erfin- dungsgemäßem Konturelement,
- Fig. 2: einen Schnitt entlang der Linie II-II,
- Fig. 3: eine Draufsicht auf die Schalteinrichtung mit einem Teilschnitt entlang der Linie III-III,
- Fig. 4: ein zweites Ausführungsbeispiel einer Schalteinrichtung mit abgewandelter Kulissenführung und
- Fig. 5: eine Draufsicht auf die Schalteinrichtung sowie einen Teilschnitt entlang der Linie V-V.

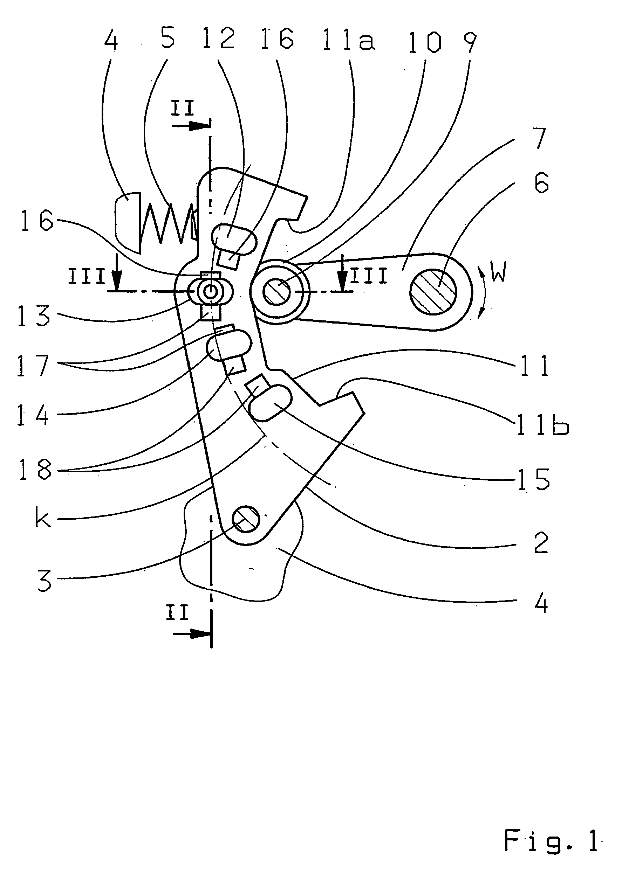

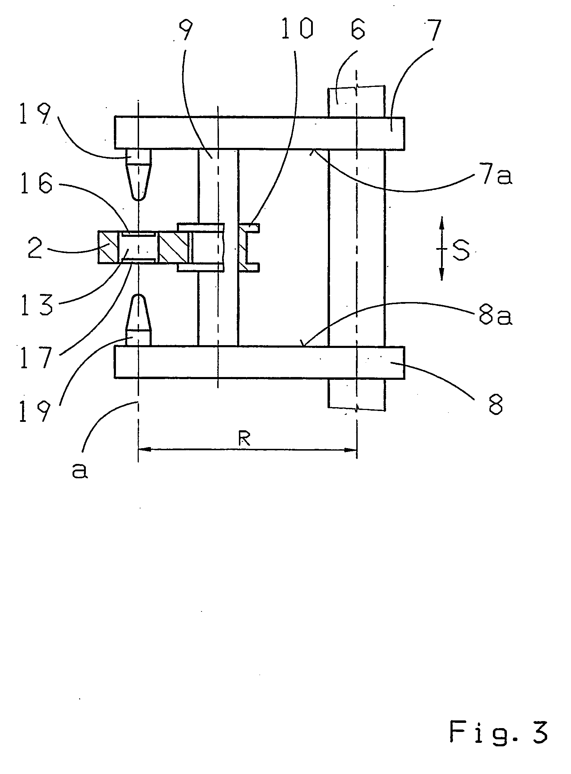

**Fig. 1** zeigt einen Ausschnitt einer Schalteinrichtung 1 mit einem Konturelement 2, welches um einen gehäusefesten Zapfen 3 schwenkbar, jedoch axial fixiert in einem Getriebegehäuse 4 gelagert und mit seinem dem Zapfen 3 abgewandten Ende über ein Federelement 5 gegenüber dem Gehäuse 4 abgestützt ist. An einer zentralen Schaltwelle 6 sind zwei Schwingarme 7, 8 (siehe auch Fig. 3) befestigt, zwischen welchen, parallel zur zentralen Schaltwelle 6, eine Achse 9 mit einer drehbaren Rolle 10 angeordnet ist. Das Konturelement 2 weist eine mit der Rolle 10 in Eingriff stehende Kontur 11 auf, welche entsprechend einem gewünschten Wählkraftverlauf gestaltet ist, wie es in der gattungsbildenden Druckschrift, der DE 102 29 320 A1 der Anmelderin, genauer beschrieben ist. Die Kontur 11 wird beiderseits durch Nasen 11a, 11b begrenzt, welche als Anschläge bei der Wählbewegung fungieren. Eine Drehbewegung der Schaltwelle 6 um ihre Längsachse entspricht also der Wählbewegung, dargestellt durch einen Doppelpfeil W. Bei der Wählbewegung wird - wie eingangs erwähnt - ein nicht dargestellter Schalthebel in einer nicht dargestellten Quergasse zum Wählen einer Schaltgasse bewegt. Die beschriebene Schalteinrichtung 1 ist Teil eines nicht dargestellten Handschaltgetriebes für Kraftfahrzeuge und soweit bekannt.

Erfindungsgemäß sind in dem Konturelement 2 langlochartig ausgebildete Ausnehmungen 12, 13, 14, 15 angeordnet, welche in Abständen zueinander etwa auf einem Kreisbogen k um die Achse der Schaltwelle 6 angeordnet und nicht dargestellten Schaltgassen zugeordnet sind. Zwischen den Ausnehmungen 12, 13, 14, 15 sind Schrägflächen 16, 17, 18, so genannte Diagonalschaltschrägen, mit Gassenabweisfunktion angeordnet.

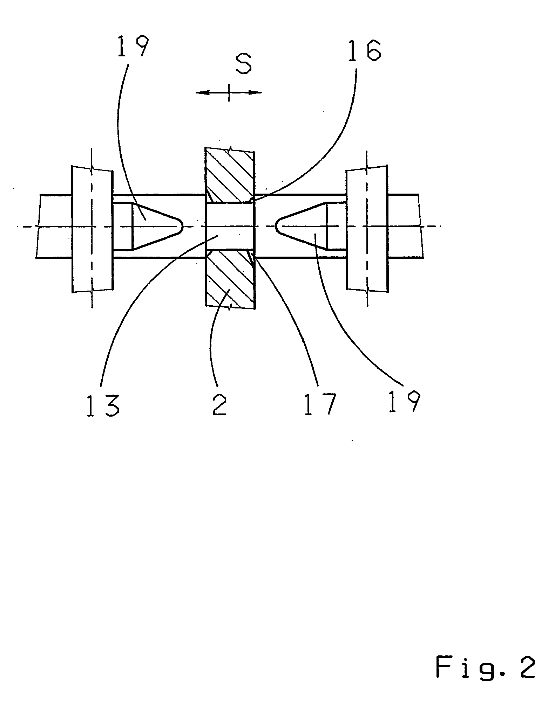

**Fig. 2** zeigt einen Teilschnitt in der Ebene II-II durch das Konturelement 2 im Bereich der Ausnehmung 13. Beiderseits der Ausnehmung 13 in Wählrichtung und beiderseits des Konturelementes 2 sind die Schrägflächen 16, 17 angeordnet, welche vorzugsweise in das Konturelement 2 eingeprägt werden. Somit ist das Konturelement 2 als Stanzprägeteil herstellbar.

**Fig. 3** zeigt eine Draufsicht auf die Schaltwelle 6 mit den beiden Schwingarmen 7, 8 sowie einen Teilschnitt in der Ebene III-III in Fig. 1. Die Schwingarme 7, 8 sind über die Rollenachse 9 hinaus verlängert und weisen an ihren Enden zwei nach innen, d. h. in Richtung auf das Konturelement 2 gerichtete Kulissenstifte 19 auf. Die Kulissenstifte 19 sind kegelig ausgebildet und an ihren Stirnseiten abgerundet; sie liegen auf einer gemeinsamen Achse a, welche durch die Ausnehmung 13 des Konturelementes 2 und in einem Abstand R parallel zur Längsachse der Schaltwelle 6 verläuft, wobei R dem Radius des Kreisbogens k in Fig. 1 entspricht. Die Schaltbewegung der Schaltwelle 6 in Längsrichtung ist durch einen Doppelpfeil S dargestellt. Aus der Darstellung wird deutlich, dass bei einer Bewegung der Schaltwelle 6 in Richtung des Pfeiles S einer der beiden Kulissenstifte 19 in Eingriff mit der Ausnehmung 13 gebracht werden kann. Die Schwingarme 7, 8 bilden bei der Schaltbewegung mit ihren Innenflächen 7a, 8a Schaltanschläge. In Fig. 2 ist die Schaltbewegung ebenfalls durch einen Doppelpfeil S dargestellt, wobei erkennbar ist, dass die Kulissenstifte 19 bei der Wählbewegung in Gleitkontakt mit den Schrägflächen 16, 17 kommen.

Die Funktion der Schalteinrichtung 1 ist Folgende: Bei der Wählbewegung entsprechend dem Doppelpfeil W werden die Schwingarme 7, 8 aus der in Fig. 1 dargestellten Ruhelage (Neutralposition) nach oben oder unten verschwenkt. Dabei wälzt sich die Rolle 10 auf der Kontur 11 des Konturelementes 2 ab, wobei infolge der Abstützung durch das Federelement 5 eine Wählkraft erzeugt wird. Wie erwähnt, entspricht der Wählbewegung W eine Querbewegung des Schalthebels in der Quergasse eines H-Schaltbildes zur Wahl einer Schaltgasse. Die Ausnehmungen in dem Konturelement 2 sind jeweils einer Schaltgasse zugeordnet, und zwar die oberste Ausnehmung 12 der Schaltgasse 5/6, die benachbarte Ausnehmung 13 der Schaltgasse 3/4 und der Neutralstellung, die Ausnehmung 14 der Schaltgasse 1/2 und die Ausnehmung 15 der Schaltgasse für den Rückwärtsgang. Bei der Wählbewegung, d. h. dem Ausschwenken der Schwingarme 7, 8 sind die Kulissenstifte 19 außer Eingriff, d. h. sie befinden sich in der in den Figuren 2 und 3 dargestellten Position außerhalb des Konturelementes 2. Nach Abschluss des Wählvorganges wird die Schaltbewegung durch Längsverschiebung der Schaltwelle 6 entsprechend dem Doppelpfeil S eingeleitet, so dass einer der beiden Kulissenstifte 19 in eine der Ausnehmungen 12 bis 15 eingreift. Damit wird eine nicht dargestellte angewählte Schaltmuffe axial verschoben und das betreffende Zahnrad des gewählten Ganges in den Leistungsfluss eingeschaltet. Bei der Wählbewegung bilden die Wählanschläge 11 a, 11 b am Konturelement 2 eine Begrenzung der Schwenkbewegung der Schwingarme 7, 8 bzw. des nicht dargestellten Schalthebels in der Quergasse. Die Schaltbewegung dagegen wird durch die Schaltanschläge 7a, 8a begrenzt.

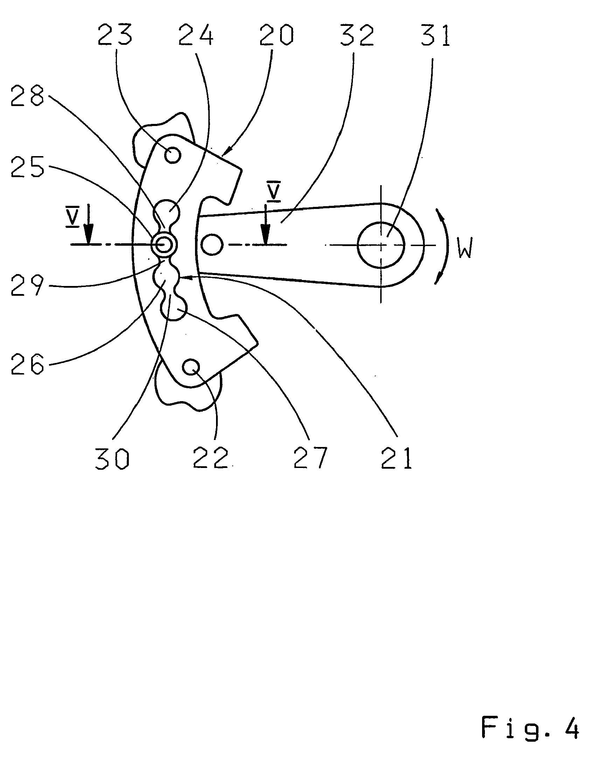

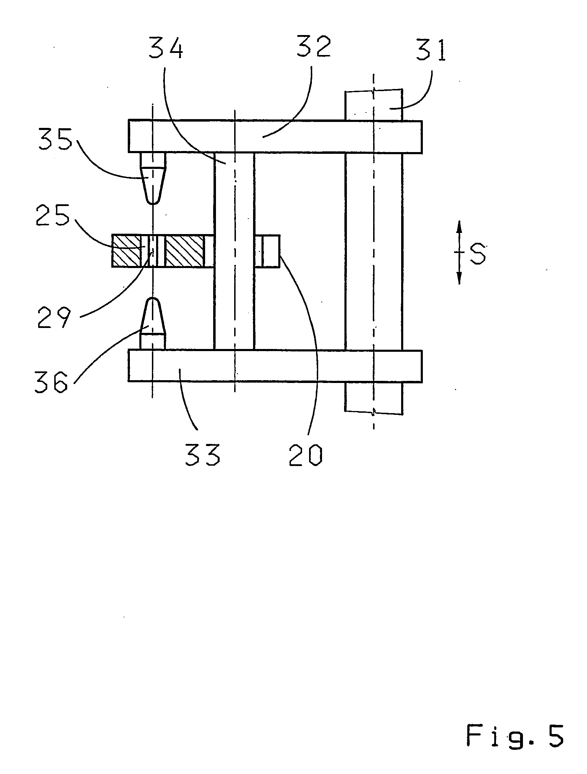

**Fig. 4** zeigt ein zweites Ausführungsbeispiel der Erfindung mit einem Konturelement 20, welches eine abgewandelte Kulissenführung in Form einer durchgehenden, geschlossenen Schlitzkontur 21 aufweist. Das Konturelement 20, im Folgenden Kulissenelement 20 genannt, ist hier als reine Kulisse ausgebildet und an zwei Punkten über Zapfen 22, 23 gehäuseseitig fixiert. Die Schlitzkontur 21 weist vier etwa kreisförmig ausgebildete Erweiterungen 24, 25, 26, 27 sowie zwischen diesen angeordnete Verengungen 28, 29, 30 auf. Die Erweiterungen 24 bis 27 sind den oben erwähnten Schaltgassen zugeordnet, die Verengungen 28 bis 30 übernehmen die Gassenabweisfunktion. In der Zeichnung rechts vom Kulissenelement 20 ist - analog zum vorherigen Ausführungsbeispiel - eine zentrale Schaltwelle 31 mit daran befestigten Tragschwingen 32, 33 (vgl. Fig. 5) angeordnet.

**Fig. 5** zeigt eine Draufsicht auf die Tragschwingen 32, 33, welche durch eine parallel zur Schaltwelle 31 angeordnete Stange 34 verbunden sind. An den der Schaltwelle 31 abgewandten Enden der Tragschwingen 32, 33 sind Kulissenstifte 35, 36 - analog dem vorherigen Ausführungsbeispiel - beiderseits des Kulissenelementes 20 angeordnet. Das Kulissenelement 20 ist entsprechend der Schnittebene V-V geschnitten, d. h. im Bereich der Erweiterung 25. Die etwa kreisförmig ausgebildeten Erweiterungen 24 bis 27 entsprechen den Durchmessern der Kulissenstifte 35, 36 und nehmen diese bei einer entsprechenden Schaltbewegung in Richtung des Doppelpfeiles S formschlüssig auf. Die Verengungen 28 bis 30 zwischen den Erweiterungen 24 bis 27 fungieren als Abweiser und verhindern in diesem Bereich eine Schaltbewegung. Sie erfüllen somit in analoger Weise die Funktion der Schrägflächen 16 bis 18 gemäß dem ersten Ausführungsbeispiel. Der Vorteil der durchgehenden, zweidimensionalen Schlitzkontur 21 liegt in einer günstigeren Herstellung: Das Kulissenelement 20 kann als reines Stanzteil hergestellt werden, d. h. ohne einen zusätzlichen Prägevorgang.

### Bezugszeichen

- 1: Schalteinrichtung
- 2: Konturelement
- 3: Zapfen
- 4: Gehäuse
- 5: Federelement
- 6: Schaltwelle
- 7: Schwingarm
- 7a: Schaltanschlag
- 8: Schwingarm
- 8a: Schaltanschlag
- 9: Achse
- 10: Rolle
- 11: Kontur
- 11a: Wählanschlag
- 11b: Wählanschlag
- 12: Ausnehmung (5/6)
- 13: Ausnehmung (3/4)
- 14: Ausnehmung (1/2)
- 15: Ausnehmung (R)
- 16: Schrägflächenpaar
- 17: Schrägflächenpaar
- 18: Schrägflächenpaar
- 19: Kulissenstift
- 20: Konturelement (Kulissenelement)
- 21: Schlitzkontur
- 22: Zapfen
- 23: Zapfen
- 24: Erweiterung
- 25: Erweiterung
- 26: Erweiterung
- 27: Erweiterung
- 28: Verengung
- 29: Verengung
- 30: Verengung
- 31: Schaltwelle
- 32: Tragschwinge
- 33: Tragschwinge
- 34: Stange
- 35: Kulissenstift
- 36: Kulissenstift

## Patentansprüche

1. Schalteinrichtung mit einer zentralen Schaltwelle in einem Handschaltgetriebe eines Kraftfahrzeuges, wobei auf der Schaltwelle (6) zwei eine Achse (9) mit einer Rolle (10) tragende Schwingarme (7, 8) befestigt sind und die Rolle (10) mit einem schwenkbar gelagerten, federbelasteten Konturelement (2) in Eingriff steht, **dadurch gekennzeichnet, dass** das Konturelement (2) eine sich im Bereich eines zur Schaltwelle (6) konzentrischen Kreisbogens k erstreckende Kulissenführung und die Schwingarme (7, 8) Kulissenstifte (19) aufweisen, die parallel zu Schaltwelle (6) und auf dem Radius R des Kreisbogens k angeordnet sind und dass die Kulissenstifte (19) durch eine axial gerichtete Bewegung der Schaltwelle (6) in Eingriff mit der Kulissenführung bringbar sind.

2. Schalteinrichtung nach Anspruch 1, **dadurch gekennzeichnet, dass** die Kulissenführung durch eine Mehrzahl von Ausnehmungen (12, 13, 14, 15) gebildet ist.

3. Schalteinrichtung nach Anspruch 2, **dadurch gekennzeichnet, dass** die Ausnehmungen (12 -15) langlochartig mit einer Längserstreckung in Richtung auf die Schaltwelle (6) ausgebildet sind.

4. Schalteinrichtung nach Anspruch 2 oder 3, **dadurch gekennzeichnet, dass** zwischen den Ausnehmungen (12 - 15) in Wähl- bzw. Schwenkrichtung der Kulissenstifte (19) Schrägflächen (16, 17, 18) angeordnet sind.

5. Schalteinrichtung nach einem der Ansprüche 1 bis 4, **dadurch gekennzeichnet , dass** das Konturelement (2) als Stanzprägeteil herstellbar ist.

6. Schalteinrichtung nach Anspruch 1, **dadurch gekennzeichnet, dass** die Kulissenführung als in Richtung des Kreisbogens k durchgehende Schlitzkontur (21) mit Erweiterungen (24, 25, 26, 27) und Verengungen (28, 29, 30) ausgebildet ist.

7. Schalteinrichtung nach Anspruch 6, **dadurch gekennzeichnet, dass** das Konturelement (20) als Stanzteil herstellbar ist.

8. Schalteinrichtung nach einem der Ansprüche 1 bis 7, **dadurch gekennzeichnet , dass** die Kulissenstifte (19) stirnseitig abgerundet und/oder angefast sind.

9. Schalteinrichtung nach einem der Ansprüche 2 bis 8, **dadurch gekennzeichnet, dass** die Ausnehmungen (12 -15) bzw. die Erweiterungen (24 - 27) Rastpositionen für einen gewählte Schaltgasse bilden.

10. Schalteinrichtung nach einem der Ansprüche 2 bis 9, **dadurch gekennzeichnet, dass** die Schrägflächen (16 - 18) bzw. die Verengungen (28 - 30) als Abweiser für die Kulissenstifte (19; 35, 36) ausgebildet sind.

11. Schalteinrichtung nach einem der Ansprüche 1 bis 10, **dadurch gekennzeichnet , dass** das Konturelement (2) als Nasen (11 a, 11 b) ausgebildete Wählanschläge zur Begrenzung der Wählbewegung aufweist.

12. Schalteinrichtung nach einem der Ansprüche 1 bis 11, **dadurch gekennzeichnet, dass** die Schwingarme (7, 8) Innenflächen (7a, 8a) aufweisen, die Schaltanschläge für die Begrenzung der Schaltbewegungen bilden.

## Claims

1. Shifting device having a central shifting shaft in a manual gearbox of a motor vehicle, with two rocker arms (7, 8), which support an axle (9) with a roller (10), being fastened to the shifting shaft (6) and with the roller (10) being in engagement with a pivotably mounted, spring-loaded contoured element (2), **characterized in that** the contoured element (2) has a slotted guide which extends in the region of a circular arc k which is concentric with respect to the shifting shaft (6), and the rocker arms (7, 8) have slotted-guide pins (19) which are arranged parallel to the shifting shaft (6) and on the radius R of the circular arc k, and **in that** the slotted-guide pins (19) can be placed in engagement with the slotted guide by means of a movement of the shifting shaft (6) in the axial direction.

2. Shifting device according to Claim 1, **characterized in that** the slotted guide is formed by a multiplicity of recesses (12, 13, 14, 15).

3. Shifting device according to Claim 2, **characterized in that** the recesses (12 - 15) are formed in the manner of elongated holes with a longitudinal extent in the direction of the shifting shaft (6).

4. Shifting device according to Claim 2 or 3, **characterized in that** oblique surfaces (16, 17, 18) are arranged between the recesses (12 - 15) in the selection or pivoting direction of the slotted-guide pins (19).

5. Shifting device according to one of Claims 1 to 4, **characterized in that** the contoured element (2) can be produced as a punched, embossed part.

6. Shifting device according to Claim 1, **characterized in that** the slotted guide is formed as a slot contour (21) which is continuous in the direction of the circular arc k and which has widened portions (24, 25, 26, 27) and narrowed portions (28, 29, 30).

7. Shifting device according to Claim 6, **characterized in that** the contoured element (20) can be produced as a punched part.

8. Shifting device according to one of Claims 1 to 7, **characterized in that** the slotted-guide pins (19) are rounded and/or chamfered at the end side.

9. Shifting device according to one of Claims 2 to 8, **characterized in that** the recesses (12 - 15) or the widened portions (24 - 27) form latching positions for a selected shifting lane.

10. Shifting device according to one of Claims 2 to 9, **characterized in that** the oblique surfaces (16 - 18) or the narrowed portions (28 - 30) are formed as deflectors for the slotted-guide pins (19; 35, 36).

11. Shifting device according to one of Claims 1 to 10, **characterized in that** the contoured element (2) has selection stops, which are formed as lugs (11a, 11b), for limiting the selection movement.

12. Shifting device according to one of Claims 1 to 11, **characterized in that** the rocker arms (7, 8) have inner surfaces (7a, 8a) which form shifting stops for limiting the shifting movements.

## Revendications

1. Dispositif de changement de vitesse doté d'un arbre de changement de vitesse central placé dans une boîte de vitesses manuelle d'un véhicule automobile, deux bras oscillants (7, 8) supportant un essieu (9) avec un rouleau (10) étant fixés sur l'arbre de changement de vitesse (6) et le rouleau (10) étant en prise avec un élément de contour (2) chargé par ressort disposé de façon pivotante, **caractérisé en ce que** l'élément de contour (2) comporte un guide à coulisses s'étendant dans la zone d'un arc de cercle k s'étendant de façon concentrique par rapport à l'arbre de changement de vitesse (6) et les bras oscillants (7, 8) comportant des tiges de coulisse (19) disposées parallèlement à l'arbre de changement de vitesse (6) et disposées sur le rayon R de l'arc de cercle k et **en ce que** les tiges de coulisse (19) peuvent être amenées en prise avec le guide à coulisses par mouvement axial de l'arbre de changement de vitesse (6).

2. Dispositif de changement de vitesse selon la revendication 1, **caractérisé en ce que** le guide à coulisses est formé par une pluralité d'évidements (12, 13, 14, 15).

3. Dispositif de changement de vitesse selon la revendication 2, **caractérisé en ce que** les évidements (12 - 15) prennent une forme de trou oblong avec une extension longitudinale en direction de l'arbre de changement de vitesse (6).

4. Dispositif de changement de vitesse selon la revendication 2 ou 3, **caractérisé en ce que** des surfaces obliques (16, 17, 18) sont disposées entre les évidements (12 - 15) dans la direction de sélection et/ou de pivotement des tiges de coulisse (19).

5. Dispositif de changement de vitesse selon l'une quelconque des revendications 1 à 4, **caractérisé en ce que** l'élément de contour (2) peut être fabriqué en forme de pièce estampée.

6. Dispositif de changement de vitesse selon la revendication 1, **caractérisé en ce que** le guide à coulisses prend la forme d'un contour à fente (21) traversant en direction de l'arc de cercle k avec des élargissements (24, 25, 26, 27) et des rétrécissements (28, 29, 30).

7. Dispositif de changement de vitesse selon la revendication 6, **caractérisé en ce que** l'élément de contour (20) est fabriqué en forme de pièce découpée.

8. Dispositif de changement de vitesse selon l'une quelconque des revendications 1 à 7, **caractérisé en ce que** les tiges de coulisse (19) sont arrondies et/ou biseautées du côté frontal.

9. Dispositif de changement de vitesse selon l'une quelconque des revendications 2 à 8, **caractérisé en ce que** les évidements (12 - 15) et/ou les élargissements (24 - 27) forment des positions d'arrêt pour une ruelle de changement de vitesse sélectionnée.

10. Dispositif de changement de vitesse selon l'une quelconque des revendications 2 à 9, **caractérisé en ce que** les surfaces obliques (16 - 18) et/ou les rétrécissements (28 - 30) prennent une forme de déflecteur pour les tiges de coulisse (19 ; 35, 36).

11. Dispositif de changement de vitesse selon l'une quelconque des revendications 1 à 10, **caractérisé en ce que** l'élément de contour (2) comporte des butées de sélection prenant la forme d'ergots (11a, 11b) pour limiter le mouvement de sélection.

12. Dispositif de changement de vitesse selon l'une quelconque des revendications 1 à 11, **caractérisé en ce que** les bras oscillants (7, 8) comportent des surfaces intérieures (7a, 8a) formant des butées de changement de vitesse pour limiter les mouvements de changement de vitesse.
